# EUROPÄISCHE PATENTSCHRIFT

(11) **EP 0 694 143 B1**
(45) Veröffentlichungstag und Bekanntmachung des Hinweises auf die Patenterteilung: **04.03.1998**
(21) Anmeldenummer: 94911935.8
(22) Anmeldetag: 21.03.1994
(51) Int. Cl.: F16L 47/00, B25B 27/10

(54) **ROHRLEITUNGSVERBINDUNG, ROHRLEITUNGSVERBINDER UND HYDRAULIKVORRICHTUNG ZUR HERSTELLUNG VON ROHRLEITUNGSVERBINDUNGEN**
PIPE JOINT, PIPE CONNECTOR AND HYDRAULIC DEVICE FOR PRODUCING PIPE JOINTS
RACCORDEMENT DE TUYAUTERIE, ELEMENT DE RACCORDEMENT DE TUYAUTERIE ET DISPOSITIF HYDRAULIQUE PERMETTANT DE REALISER DES RACCORDEMENTS DE TUYAUTERIE

(30) Priorität: 27.03.1993 DE 4310000
(43) Veröffentlichungstag der Anmeldung: 31.01.1996
(73) Patentinhaber: WIRSBO ROHRPRODUKTION UND VERTRIEBS-GmbH, D-63150 Heusenstamm (DE)
(72) Erfinder: Imgram, Friedrich, D-63150 Heusenstamm (DE)
(74) Vertreter: Wolgast, Rudolf, Dipl.-Chem. Dr.
(86) Internationale Anmeldenummer: EP9400874
(87) Internationale Veröffentlichungsnummer: WO9423237

(56) Entgegenhaltungen:
- DE-A- 3 817 442
- DE-U- 8 914 321
- FR-A- 1 055 815
- GB-A- 773 033
- GB-A- 903 757
- US-A- 4 054 984

## Beschreibung

Die Erfindung bezieht sich auf eine Rohrleitungsverbindung, enthaltend einen Rohrleitungsverbinder mit einem Anschlußteil, das eine Oberflächenstruktur aufweist, und ein bei Umgebungstemperatur aufgeweitetes Rohrende eines bei Umgebungstemperatur selbst-rückverformbaren Rohres, das fest und abdichtend mit dem Anschlußteil verbunden ist.

Die Erfindung bezieht sich auch auf einen Rohrleitungsverbinder zur Herstellung einer festen und abdichtenden Verbindung mit einem bei Umgebungstemperatur aufgeweiteten Rohrende eines bei Umgebungstemperatur selbst-rückverformbaren Rohres, enthaltend mindestens ein Anschlußteil mit einer Oberflächenstruktur, von der ausgehend sich eine Verlängerung in Form eines strukturlosen zylindrischen Rohres erstreckt, die das freie Ende des Anschlußteils bildet.

Schließlich bezieht sich die Erfindung auch auf die Verwendung einer hydraulischen Aufziehvorrichtung zur Verbindung eines Rohrleitungsverbinders mit einem Rohrende, enthaltend mindestens eine Hydraulikzylinder-Kolbeneinheit, eine Halterung für ein Rohrende bzw. den Rohrleitungsverbinder, eine verstellbare Halterung für den Rohrleitungsverbinder bzw. das Rohrende, und eine Hydraulikpumpe, die an die mindestens eine Hydraulikzylinder-Kolbeneinheit angeschlossen ist.

Aus der veröffentlichten europäischen Patentanmeldung Nummer 0 530 387 ist es bekannt, daß feste und gasdichte Rohrleitungsverbindungen mit Rohren aus einem Werkstoff wie mitteldichtes, hochdichtes oder thermoelastisches, vernetztes Polyolefin bei Umgebungstemperatur dadurch erzeugt werden können, daß das Rohrende reversibel aufgeweitet und auf das Anschlußteil des Rohrleitungsverbinders aufgebracht wird. Dazu wird üblicherweise ein Spreizdorn verwendet. Das Material, insbesondere das thermoelastische, vernetzte Polyolefin unterliegt auch unter diesen Bedingungen einer Selbst-Rückverformung in den ursprünglichen Zustand, die auch bei Umgebungstemperatur rasch genug verläuft, um nach der Aufweitung eine feste und gasdichte Verbindung mit dem Rohrleitungsverbinder zu bilden. Die feste und gasdichte Verbindung wird dabei durch eine Oberflächenstruktur am Anschlußteil des Rohrleitungsverbinders bewirkt, um die herum sich das aufgeweitete Rohrende bei der Selbst-Rückverformung zusammenzieht, sodaß eine großflächige, sehr enge Verbindung zwischen dem Rohrende und dem Anschlußteil des Rohrleitungsverbinders gebildet wird.

Aus der GB-A-773 033 ist ein Rohrverbinder bekannt, der mit einem aufgeweiteten Rohrende eines PVC-Rohres verbindbar ist. Der Rohrverbinder enthält ein Anschlußteil mit einer Oberflächenstruktur in Form einer ringförmigen Aufweitung, von der sich ein glattes, rohrförmiges Ende erstreckt, das eine Dichtung trägt. Das Rohrende des PVC-Rohres wird bis zur Erweichung aufgeheizt und im erweichten Zustand mit einem Dorn aufgeweitet, der nach dem Erkalten aus dem aufgeweiteten Rohrende herausgezogen wird. Der Rohrverbinder wird dann in das aufgeweitete Rohrende eingeführt, das anschließend wieder bis zur Erweichungstemperatur aufgeheizt wird. Dabei zieht sich das aufgeweitete Rohrende wieder zusammen und legt sich fest und abdichtend an das mit der Dichtung versehene rohrförmige Ende des Rohrverbinders und dessen ringförmige Aufweitung an.

Durch die DE-U-89 14 321 ist ein hydraulisches Rohrmontagegerät bekannt, das einen Hydraulikzylinder mit einem doppeltwirkenden Kolben enthält. Ein Ende des Zylinders und das freie Ende des Kolbens sind jeweils mit einer Rohrhalterung für die Rohrenden zweier Rohre verbunden, die auf Rollen geführt sind. Das eine der beiden Rohrenden ist mit einer Muffe oder Aufweitung versehen und zwischen den zu verbindenden Rohrenden befindet sich eine Muffendichtung. Die beiden Rohrenden werden durch Betätigung des Hydraulizylinders ineinander gefahren, wobei durch die eingelegte Muffendichtung eine feste und abdichtende Verbindung hergestellt wird.

Es hat sich in der Praxis herausgestellt, daß die eingangs genannten, unter Verwendung des Spreizdorns bei Umgebungstemperatur hergestellten Rohrleitungsverbindungen mit gutem Erfolg bei Rohrdurchmessern im Bereich von 50 mm und darüber erzeugt werden können. Bei kleineren Rohrweiten besteht ein Problem darin, daß diese engere Rohrleitung relativ biegsam ist und sich beim Verbiegen der Rohrleitung das Rohrende unter Umständen von dem Anschlußteil des Rohrleitungsverbinders lösen kann, was ausreicht, um eine unerwünschte Undichtigkeit an der Verbindungsstelle hervorzurufen.

Die Aufgabe der Erfindung besteht dementsprechend darin, eine auch gegen Verbiegung der Rohrleitung hinreichend dichte Rohrleitungsverbindung mit dem Rohrleitungsverbinder zu schaffen, sowie einen Rohrleitungsverbinder, der eine solche hinreichend dichte Verbindung ermöglicht.

Nach der Erfindung wird diese Aufgabe hinsichtlich der Rohrleitungsverbindung dadurch gelöst, daß das Anschlußteil eine Verlängerung in Form eines strukturlosen zylindrischen Rohres aufweist, das sich von der Oberflächenstruktur ausgehend erstreckt und das freie Ende des Anschlußteils bildet.

Ein erfindungsgemäßer Rohrleitungsverbinder ist dadurch gekennzeichnet, daß die Verlängerung einen Außendurchmesser hat, der kleiner als der Außendurchmesser des Anschlußteils aber größer als der Innendurchmesser des zu verbindenden Rohres ist, daß die Oberflächenstruktur aus einer Verstärkung besteht, die sich bis zum Außendurchmesser der Verlängerung hin verjüngt und in diese übergeht, und daß das freie Ende der Verlängerung abgeschrägt ist.

Hinsichtlich der Verwendung der hydraulischen Aufziehvorrichtung wird diese Aufgabe dadurch gelöst, daß diese zur Herstellung der erfindungsgemäßen Rohrleitungsverbindung mit Hilfe des erfindungsgemäßen Rohrleitungsverbinders eingesetzt wird.

Auf diese Weise wird erreicht, daß auch Rohrenden von Rohren mit relativ geringen Rohrdurchmessern mit dem jeweiligen Anschlußteil so verbunden werden können, daß eine Biegebeanspruchung der Rohrleitungsverbindung nicht zur Ausbildung einer Undichtigkeit führt. Das Rohrende wird auch mit der Verlängerung des Anschlußteils bei Umgebungstemperatur und unter Verwendung der hydraulischen Aufziehvorrichtung fest und abdichtend verbunden, ohne daß dazu eine vorhergehende Verformung oder die Zwischenlage einer Dichtung erforderlich wäre.

Vorteilhafte Weiterbildungen der erfindungsgemäßen Rohrleitungsverbindung und Rohrleitungsverbinder sind in Unteransprüchen gekennzeichnet.

In der Praxis hat sich herausgestellt, daß die Aufweitung des Rohrendes unter Verwendung eines Spreizdorns bei kleinen Rohrdurchmessern zu Schwierigkeiten führen kann. Es wurde gefunden, daß eine an sich bekannte hydraulische Aufziehvorrichtung für die Herstellung von Verbindungen mit Kunststoffrohren auch mit Vorteil für die Herstellung von Verbindungen mit Rohren aus relativ steifen Materialien wie thermoelastischem, vernetzten Polyolefin eingesetzt werden kann, und zwar auch bei Umgebungstemperatur und so, daß durch die Selbst-Rückverformung des Materials bei Umgebungstemperatur eine feste und gasdichte Verbindung ausgebildet wird.

Ausführungsbeispiele der Erfindung sind in den Abbildungen dargestellt und werden nachfolgend an Hand der Bezugszeichen im einzelnen erläutert und beschrieben. Es zeigen
Figur 1 eine Schnittansicht einer erfindunsgemäßen Rohrleitungsverbindung; und
Figur 2 eine schematische Ansicht einer hydraulischen Aufziehvorrichtung zur Herstellung der Rohrleitungsverbindung nach Figur 1.

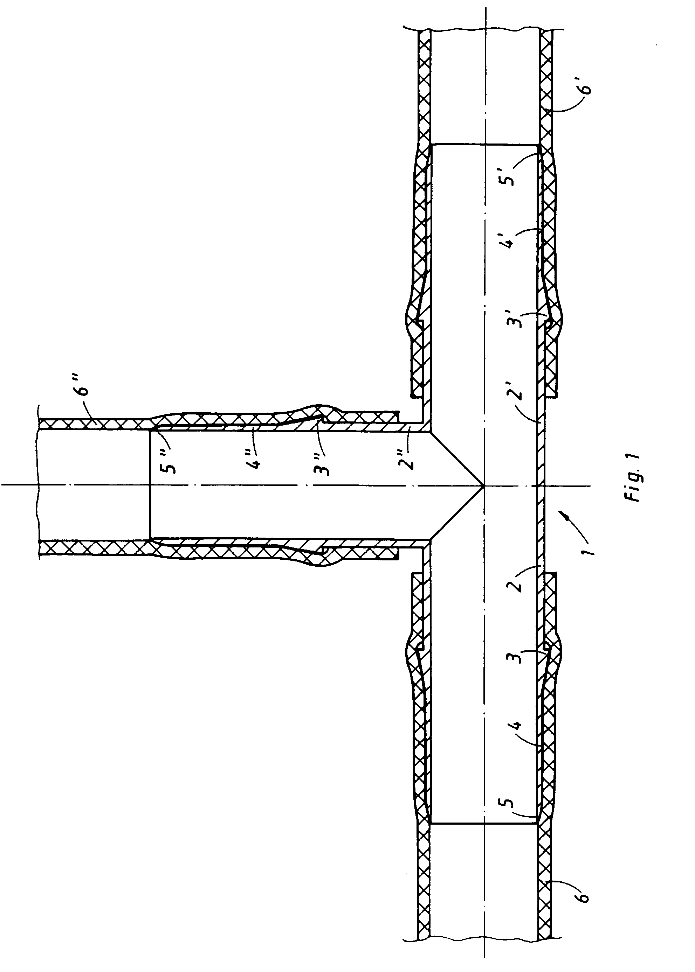

In der Schnittansicht von Figur 1 erkennt man einen Rohrleitungsverbinder 1 in Form eines T-Stücks, das drei Anschlußteile 2, 2' und 2" enthält. Jedes der Anschlußteile 2, 2' und 2" enthält eine Oberflächenstruktur in Form einer Verstärkung 3, 3' und 3", die aber auch als Rille oder Sicke oder dergleichen ausgebildet sein kann. In der dargestellten Ausführung fallen die Verstärkungen 3, 3' und 3" nach innen hin steil auf den Außendurchmesser des jeweiligen Anschlußteils ab, während sie sich nach außen bzw. zum freien Ende hin verjüngen. Es entsteht so eine Struktur, die das Aufschieben eines Rohrendes durch die Rampenform erleichtert, aber andererseits durch den inneren steilen Abfall einem Wiederabziehen des aufgebrachten Rohrendes hinreichenden Widerstand entgegensetzt.

An die Verstärkungen 3, 3' und 3" schließen sich nach außen hin Verlängerungen 4, 4' und 4" an, die den gleichen Innendurchmesser wie die Anschlußteile 2, 2' und 2" haben, aber deren Außendurchmesser gegebenenfalls, wie dargestellt, gegenüber dem des jeweiligen Anschlußteils geringfügig verringert sein kann. Das freie Ende der Verlängerungen 4, 4' und 4" ist mit einer Abschrägung 5, 5' bzw. 5" versehen, um die Einführung in das jeweilige Rohrende zu erleichtern.

An jedem Anschlußteil 2, 2' und 2" erkennt man gleich ausgebildete Rohrenden 6, die auf die Anschlußteile 2, 2' und 2" aufgebracht sind. Insbesondere sind diese Rohrenden bzw. Rohre so ausgebildet, daß ihr Innendurchmesser im wesentlichen gleich dem Innendurchmesser der Anschlußteile 2, 2' und 2" ist. Auf diese Weise wird vermieden, daß innenseitig beim Übergang von den Rohrenden 6 zu dem jeweiligen Anschlußteil Kanten entstehen, die Strömungswiderstände für den Durchfluß des jeweils durchfließenden Mediums bilden. Sofern solche Strömungswiderstände keine Rolle spielen, können natürlich auch andere Verhältnisse der Innendurchmesser zueinander gewählt werden.

In dem dargestellten Ausführungsbeispiel bestehen die Rohre bzw. Rohrenden 6 aus thermoelastischem, vernetzten Polyolefin, das bei Umgebungstemperatur aufgeweitet und im aufgeweiteten Zustand auf das jeweilige Anschlußteil 2,2' oder 2" aufgebracht bzw. aufgeschoben worden ist. Man erkennt, daß sich das aufgeweitete Rohrende 6 unter Selbst-Rückverformung eng an das jeweilige Anschlußteil anlegt und sich dabei um die jeweilige Verstärkung 3,3' oder 3" zusammenzieht. Durch die Verlängerung 4,4' und 4" wird die Länge der Verbindung vergrößert und durch den Halt an der Oberflächenstruktur des jeweiligen Anschlußteils wird eine großflächige Verbindung gebildet, die auch bei Biegebeanspruchungen des zugehörigen Rohres fest und gasdicht bleibt.

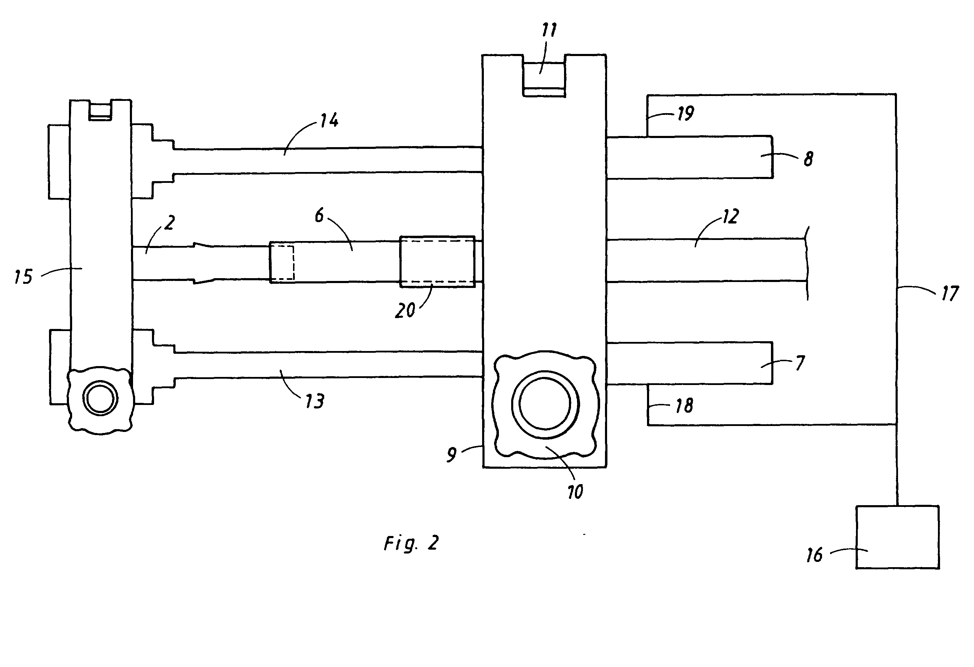

Die vorstehend beschriebene Rohrleitungsverbindung kann in dem Bereich, der dem aufgeweiteten Rohrende benachbart ist, von dem Aufweitungsvorgang her noch eine außen aufgebrachte Verstärkung 20 (vgl. Fig.2) enthalten, die aus einem elastomeren, thermoplastischen oder thermoelastischen Material besteht, das elastischer sein kann als das Material des Rohres, aber auch aus dem gleichen Material wie dieses bestehen kann.

Der Rohrleitungsverbinder 1 ist in dem dargestellten Ausführungsbeispiel als T-Stück ausgebildet; er kann aber stattdessen Y-förmig oder anders ausgebildet sein, beispielsweise auch ein einfacher Rohrverbinder mit nur zwei Anschlußteilen sein. Im einfachsten Fall kann das Anschlußteil auch von einem entsprechend ausgebildeten Rohrende gebildet werden, wenn eine Direktverbindung zwischen zwei Rohrenden beabsichtigt ist. In dem dargestellten Ausführungsbeispiel besteht der Rohrleitungsverbinder aus Metall, insbesondere Bronze; er kann aber auch aus anderen Materialien wie Glas oder Kunststoff bestehen und auch aus thermoelastischem, vernetztem Polyolefin.

Zur Herstellung der Verbindung zwischen einem Anschlußteil der vorgenannten Art und einem Rohrende dient beispielsweise eine in Figur 2 schematisch dargestellte hydraulische Aufziehvorrichtung, deren Gebrauch zusammen mit gewöhnlichen Kunststoffrohren an sich bekannt ist. Es wurde gefunden, daß diese hydraulische Aufziehvorrichtung mit Vorteil auch für die reversible Aufweitung der Rohrenden von Rohren aus thermoelastischem, vernetzten Polyolefin bei Umgebungstemperatur eingesetzt werden kann.

Man erkannt in Figur 2 zwei Hydraulikzylinder 7 und 8, die parallel zueinander angeordnet sind und durch eine erste Halterung 9 überbrückt sind. Die erste Halterung 9 enthält am einen Ende eine Rändelschraube 10 oder dergleichen und am anderen Ende ein Scharnier 11. Durch das Scharnier 11 werden zwei Halteglieder der ersten Halterung 9 so miteinander verbunden, daß sie aufklappbar sind und zwischen sich ein Rohrende 6 eines Rohres 12 aufnehmen und im geschlossenen Zustand halten können.

Aus den Hydraulikzylindern 7 und 8 stehen parallel verlaufende Kolbenstangen 13 und 14 vor, die an den freien Enden durch eine zweite Halterung 15 überbrückt sind. Auch die zweite Halterung 15 besteht aus scharnierverbundenen Haltegliedern, zwischen denen ein Rohrverbinder, zum Beispiel ein Rohrverbinder 1 aufgenommen und so gehaltert werden kann, daß - wie gezeigt - ein Anschlußteil 2 aus der zweiten Halterung 15 gegen das Rohrende 6 vorsteht.

Eine von Hand betätigbare Hydraulikpumpe 16 ist durch eine Hydraulikleitung 17 mit Anschlüssen 18 und 19 an die Hydraulikzylinder 7 bzw. 8 angeschlossen. Man erkennt, daß bei Betätigung der Hydraulikpumpe 16 die Kolbenstangen 13 und 14 in die jeweiligen Hydraulikzylinder 7 und 8 eingezogen werden. Infolgedessen wird die zweite Halterung 15 mit dem Anschlußteil 2 gegen das freie Rohrende 6 und in dieses hineingezogen. Auf diese Weise wird sogleich eine feste und gasdichte Verbindung zwischen dem Anschlußteil 2 und dem Rohrende 6 erhalten.

Zur Abstützung des Rohrendes 6 gegen Verformungen beim Einziehen des Anschlußteils 2 ist vorgesehen, das Rohrende 6 in dem Bereich, der über die erste Halterung 9 hinaus vorsteht und der nicht auf das Anschlußteil 2 aufgezogen wird bzw. der dem aufzuweitenden Rohrende 6 benachbart ist, mit einer Verstärkung 20 aus elastomerem, thermoplastischem oder thermoelastischem Material zu umgeben. Das Material der Verstärkung 20 kann elastischer sein als das Material des Rohres, aber auch aus dem gleichen Material wie dieses bestehen. Die Verstärkung 20 kann nach der Aufweitung des Rohrendes 6 entfernt oder auch auf dem Rohrende 6 belassen werden.

Selbstverständlich kann die hydraulische Aufziehvorrichtung auch so betrieben werden, daß das Rohrende 6 in die zweite Halterung 15 und der Rohrleitungsverbinder mit dem Anschlußteil 2 in die erste Halterung 9 eingebracht wird.

Anstelle der vorstehend beschriebenen Hydraulikvorrichtung kann für den gleichen Zweck auch eine andere, an sich bekannte und daher nicht dargestellte Hydraulikvorrichtung mit nur einem Hydraulikzylinder verwendet werden. Darin ist entweder eine Halterung für das Rohrende oder einen Rohrleitungsverbinder an einem feststehenden Träger angebracht und eine Halterung für den Ronrleitungsverbinder bzw. das Rohrende mit der Kolbenstange verbunden und in einer Führung geführt. Der Hydraulikzylinder ist an eine Handpumpe angeschlossen, bei deren Betätigung das Rohrende auf den Rohrleitungsverbinder aufgezogen wird.

## Patentansprüche

1. Rohrleitungsverbindung, enthaltend einen Rohrleitungsverbinder (1) mit einem Anschlußteil (2,2',2"), das eine Oberflächenstruktur aufweist, und ein bei Umgebungstemperatur aufgeweitetes Rohrende (6) eines bei Umgebungstemperatur selbst-rückverformbaren Rohres, das fest und abdichtend mit dem Anschlußteil (2,2',2") verbunden ist,
dadurch gekennzeichnet, daß
das Anschlußteil (2,2',2") eine Verlängerung (4,4',4") in Form eines strukturlosen zylindrischen Rohres aufweist, das sich von der Oberflächenstruktur ausgehend erstreckt und das freie Ende des Anschlußteils (2,2',2") bildet.

2. Rohrleitungsverbindung nach Anspruch 1, dadurch gekennzeichnet, daß die Verlängerung (4,4',4'') einen Außendurchmesser hat, der kleiner als der Außendurchmesser des Anschlußteils (2,2',2") ist.

3. Rohrleitungsverbindung nach Anspruch 1 oder 2, dadurch gekennzeichnet, daß die Oberflächenstruktur aus einer Verstärkung (3,3',3") besteht, die sich bis zum Außendurchmesser der Verlängerung (4,4', 4") hin verjüngt und in diese übergeht.

4. Rohrleitungsverbindung nach Anspruch 2 oder 3, dadurch gekennzeichnet, daß das freie Ende (5,5',5") der Verlängerung (4,4',4") abgeschrägt ist.

5. Rohrleitungsverbindung nach einem der Ansprüche 1 bis 4, dadurch gekennzeichnet, daß das Rohrende (6) einen Innendurchmesser hat, der gleich dem Innendurchmesser des Anschlußteils (2,2',2") ist.

6. Rohrleitungsverbindung nach einem der vorstehenden Ansprüche, dadurch gekennzeichnet, daß der Rohrleitungsverbinder (1) aus einem Rohrverbinder, einem Mehrfachverbinder oder einem Rohrende ausgewählt ist.

7. Rohrleitungsverbindung nach einem der vorstehenden Ansprüche, dadurch gekennzeichnet, daß das Rohr aus mitteldichtem, hochdichtem oder thermoelastischem, vernetzten Polyolefin ausgewählt ist.

8. Rohrleitungsverbindung nach einem der Ansprüche 1 bis 7, dadurch gekennzeichnet, daß das Rohr benachbart zu dem aufgeweiteten Rohrende (6), das mit dem Anschlußteil (2,2',2") verbunden ist, mit einer das Rohrende (6) umgebenden Verstärkung (20) aus einem elastomeren Material versehen ist.

9. Rohrleitungsverbinder zur Herstellung einer festen und abdichtenden Verbindung mit einem bei Umgebungstemperatur aufgeweiteten Rohrende (6) eines bei Umgebungstemperatur selbst-rückverformbaren Rohres, enthaltend mindestens ein Anschlußteil (2,2',2") mit einer Oberflächenstruktur, von der ausgehend sich eine Verlängerung (4,4',4") in Form eines strukturlosen zylindrischen Rohres erstreckt, die das freie Ende des Anschlußteils (2,2',2") bildet,
dadurch gekennzeichnet, daß
die Verlängerung (4,4',4") einen Außendurchmesser hat, der kleiner als der Außendurchmesser des Anschlußteils (2,2',2"), aber größer als der Innendurchmesser des zu verbindenden Rohres ist,
die Oberflächenstruktur aus einer Verstärkung (3,3',3") besteht, die sich bis zum Außendurchmesser der Verlängerung (4,4',4") hin verjüngt und in diese übergeht, und
das freie Ende des Anschlußteils (2,2',2") abgeschrägt ist.

10. Rohrleitungsverbinder nach Anspruch 9, dadurch gekennzeichnet, daß der Verbinder aus einem Rohrverbinder, einem Mehrfachverbinder oder einem Rohrende ausgewählt ist.

11. Verwendung einer hydraulischen Aufziehvorrichtung zur Herstellung einer Rohrleitungsverbindung nach einem der Ansprüche 1 bis 8 mit Hilfe eines Rohrleitungsverbinders nach Anspruch 9 oder 10 mit einem Rohrende, enthaltend mindestens eine Hydraulikzylinder-Kolbeneinheit, eine Halterung für ein Rohrende bzw. den Rohrleitungsverbinder, eine verstellbare Halterung für den Rohrleitungsverbinder bzw. das Rohrende, und eine Hydraulikpumpe, die an die mindestens eine Hydraulikzylinder-Kolbeneinheit angeschlossen ist, zur Verbindung eines Rohres aus einem thermoelastischen, vernetzten Polyolefin mit dem Rohrleitungsverbinder.

12. Verwendung der Aufziehvorrichtung nach Anspruch 11, dadurch gekennzeichnet, daß das hydraulisch aufzuweitende Rohrende in einem dem aufzuweitenden Rohrende benachbarten Bereich mit einer Verstärkung (20) aus einem elastomeren Material versehen ist.

13. Verwendung der Aufziehvorrichtung nach Anspruch 11 oder 12, dadurch gekennzeichnet, daß die Hydraulikzylinder-Kolbeneinheit einen Zylinder mit einem Kolben und einem Öltank aufweist und an eine handbetätigte Pumpe angeschlossen ist, und daß ein feststehender Träger für den Rohrverbinder bzw. das Rohrende und ein beweglich in einer Führung geführter Träger für das Rohrende bzw. den Rohrverbinder vorgesehen ist.

14. Verwendung der Aufziehvorrichtung nach Anspruch 11 oder 12, dadurch gekennzeichnet, daß zwei HydraulikzylinderKolbeneinheiten mit je einem Hydraulikzylinder und einer Kolbenstange vorgesehen sind, daß die feststehende Halterung die beiden parallel angeordneten Hydraulikzylinder überbrückt, und daß die verstellbare Halterung an den parallel verlaufenden, aus den Hydraulikzylindern vorstehenden Kolbenstangen angebracht ist.

## Claims

1. Pipe connection comprising a pipe connector (1) with a joining portion (2, 2', 2") having a surface structure and a pipe end (6) of a pipe, which is self-redeformable with ambient temperature and rigidly and tightly connected to the joining portion (2,2',2"), the pipe end being widen with ambient temperature,
characterized in that
the joining portion (2,2',2") has an elongation (4,4',4") in form of a structureless cylindrical pipe extending from the surface structure and forming the free end of the joining portion (2,2',2").

2. Pipe connection as set forth in claim 1, characterized in that the elongation (4,4',4") has an outer diameter which is smaller than the outer diameter of the joining portion (2,2',2").

3. Pipe connection as set forth in claim 1 or 2, characterized in that the surface structure is made of a reinforcement (3,3',3") narrowing up to the outer diameter of the elongation (4,4',4") and going over thereto.

4. Pipe connection as set forth in claim 2 or 3 characterized in that the free end (5,5',5'') of the elongation (4,4',4'') is beveled.

5. Pipe connection as set forth in one of claims 1 to 4, characterized in that the pipe end (6) has an inner diameter which is equal to the inner diameter of the joining portion (2,2',2").

6. Pipe connection as set forth in one of the above disclosed claims, characterized in that the pipe connector (1) is selected from a pipe connector, a multiple connector or a pipe end.

7. Pipe connector as set forth in on of the above disclosed claims , characterized in that the pipe is selected from half density, high density or thermoelastic cross-linked polyolefine.

8. Pipe connector as set forth in one of claims 1 to 7, characterized in that the pipe is provided with a reinforcement (20) out of elastomeric material surrounding the pipe end (6), adjacent to the widen pipe end (6) connected to the joining portion (2,2',2").

9. Pipe connector for providing a rigid and tight connection to a pipe end (6) of a pipe, which is self-redeformable with ambient temperature, the pipe end being widen with ambient temperature, and comprising at least one joining portion (2,2',2") with a surface structure, an elongation (4,4',4") extending therefrom in form of a structureless cylindrical pipe forming the free end of the joining portion (2,2',2"),
characterized in that
the elongation (4,4',4") has an outer diameter which is smaller than the outer diameter of the joining portion (2,2',2"), but larger than the inner diameter of the pipe to be connected,
the surface structure is made of a reinformcement (3,3',3") narrowing up to the outer diameter of the elongation (4,4' 4") and going over thereto, and
the free end of the joining portion (2,2',2") is beveled.

10. Pipe connector as set forth in claim 9, characterized in that the connector is selected from a pipe connector, a multiple connector or a pipe end.

11. Application of a hydraulic drawing device for providing a pipe connection according to one of claims 1 to 8 by means of a pipe connector according to claim 9 or 10 with a pipe end comprising at least one hydraulic cylinder piston unit, a mounting for the pipe end and the pipe connector, respectively, an adjustable mounting for the pipe connector and the pipe end, respectively, and a hydraulic pump connected to the at least one hydraulic cylinder piston unit for connecting a pipe made of a thermoelastic cross-linked polyolefine to the pipe connector.

12. Application of the drawing device as set forth in claim 11, characterized in that the pipe end to be widen hydraulically is provided with a reinforcement (20) of elastomeric material in an area adjacent to the pipe end to be widen.

13. Application of the drawing device as set forth in claim 11 or 12, characterized in that the hydraulic cylinder piston unit has a cylinder with a piston and an oil tank and is connected to a manually actuated pump, and that a stationary support for the pipe connector and the pipe end, respectively and a support for the pipe end and the pipe connector, respectively, are provided, the support being movably guided in a guide.

14. Application of the drawing device as set forth in claim 11 or 12, characterized in that two hydraulic cylinder piston units with a hydraulic cylinder and a piston rod each are provided, that the stationary mounting is bridging the two parallel hydraulic cylinders, and that the adjustable support is fixed to the parallel piston rods projecting from the hydraulic cylinders.

## Revendications

1. Connexion de conduite de tuyaux, comprenant un raccord de conduite de tuyaux (1) muni d'une pièce de raccordement (2,2',2") présentant une structure superficielle, et une extrémité de tuyau (6) élargie à température ambiante d'un tuyau susceptible de revenir automatiquement à sa forme initiale à température ambiante et connectée à la pièce de raccordement (2,2',2") de façon fixe et à rendre étanche,
**caractérisée par le fait que**
l'élément de raccordement (2,2',2") présente une rallonge (4,4',4'') en forme de tuyau cylindrique sans structure qui s'étire à partir de la structure superficielle et qui forme l'extrémité libre de la pièce de raccordement (2,2',2").

2. Connexion de conduite de tuyaux selon la revendication 1, **caractérisée par le fait que** la rallonge (4,4',4'') a un diamètre extérieur inférieur au diamètre extérieur de la pièce de raccordement (2,2',2").

3. Connexion de conduite de tuyaux selon la revendication 1 ou 2, **caractérisée par le fait que** la structure superficielle se compose d'un renforcement (3,3',3") qui se rétrécit jusqu'au diamètre extérieur du renforcement (4,4',4") et se confond avec celui-ci.

4. Connexion de conduite de tuyaux selon la revendication 2 ou 3, **caractérisée par le fait que** l'extrémité libre (5,5',5") du renforcement (4,4',4") est biseautée.

5. Connexion de conduite de tuyaux selon l'une des revendications 1 à 4, **caractérisée par le fait que** l'extrémité de tuyau (6) a un diamètre intérieur égal au diamètre intérieur de la pièce de raccordement (2,2',2").

6. Connexion de conduite de tuyaux selon l'une des revendications précédentes, **caractérisée par le fait que** le raccord de conduite de tuyaux (1) est choisi parmi un raccord de tuyau, un raccord multiple ou une extrémité de tuyau.

7. Connexion de conduite de tuyaux selon l'une des revendications précédentes, **caractérisée par le fait que** le tuyau est choisi parmi de la polyoléfine réticulée moyennement dense, très dense ou thermoélastique.

8. Connexion de conduite de tuyaux selon l'une des revendications 1 à 7, **caractérisée par le fait que** le tuyau adjacent à l'extrémité de tuyau (6) élargie connectée à la pièce de raccordement (2,2',2") est pourvu d'un renforcement (20) entourant l'extrémité de tuyau (6) fait avec un matériau élastomère.

9. Raccord de conduite de tuyaux destiné à établir une connexion fixe et rendant étanche avec une extrémité de tuyau (6) élargie à température ambiante d'un tuyau susceptible de revenir automatiquement à sa forme initiale à température ambiante, comprenant au moins une pièce de raccordement (2,2',2") munie d'une structure superficielle à partir de laquelle s'étire une rallonge (4,4',4") en forme de tuyau cylindrique sans structure qui forme l'extrémité libre de la pièce de raccordement (2,2',2"),
**caractérisé par le fait que**
la rallonge (4,4',4") a un diamètre extérieur inférieur au diamètre extérieur de la pièce de raccordement (2,2',2"), mais supérieur au diamètre intérieur du tuyau devant être connecté,
la structure superficielle se compose d'un renforcement (3,3',3") qui se rétrécit jusqu'au diamètre extérieur de la rallonge (4,4',4") et qui se confond avec celle-ci, et
l'extrémité libre de la pièce de raccordement (2,2',2") est biseautée.

10. Raccord de conduite de tuyaux selon la revendication 9, **caractérisé par le fait que** le raccord est choisi parmi un raccord de tuyau, un raccord multiple ou une extrémité de tuyau.

11. Utilisation d'un dispositif d'assemblage hydraulique destiné à établir une connexion de conduite de tuyaux selon l'une des revendications 1 à 8 à l'aide d'un raccord de conduite de tuyaux selon la revendication 9 ou 10 avec une extrémité de tuyau, comprenant au moins une unité de piston de cylindre hydraulique, une fixation pour une extrémité de tuyau et le raccord de conduite de tuyaux respectivement, une fixation susceptible d'être réglée pour le raccord de conduite de tuyaux et pour l'extrémité de tuyau respectivement, et une pompe hydraulique raccordée à au moins l'une des unités de piston de cylindre hydraulique, dispositif destiné à connecter un tuyau fait en polyoléfine réticulée thermoélastique avec un raccord de conduite de tuyaux.

12. Utilisation du dispositif d'assemblage hydraulique selon la revendication 11, **caractérisée par le fait que** l'extrémité de tuyau devant être élargie hydrauliquement est pourvue d'un renforcement (20) fait avec un matériau élastomère dans un domaine adjacent à l'extrémité de tuyau devant être élargie.

13. Utilisation du dispositif d'assemblage hydraulique selon la revendication 11 ou 12, **caractérisée par le fait que** l'unité de piston de cylindre hydraulique présente un cylindre muni d'un piston et d'un réservoir d'huile et qu'elle est raccordée à une pompe actionnée manuellement, et qu'un support fixe pour le raccord de tuyau et l'extrémité de tuyau respectivement et un support guidé dans un guidage de façon susceptible de se déplacer pour l'extrémité de tuyau et le raccord de tuyau respectivement sont prévus.

14. Utilisation du dispositif d'assemblage hydraulique selon la revendication 11 ou 12, **caractérisée par le fait que** deux unités de piston de cylindre hydraulique sont pourvues de chaque fois un cylindre hydraulique et d'une tige de piston, que la fixation fixe fait la transition entre les deux cylindres hydrauliques disposés parallèlement, et que la fixation susceptible d'être réglée est placée aux tiges de piston dépassant des cylindres hydrauliques et s'étendant parallèlement.
